# EUROPEAN PATENT APPLICATION

(11) **EP 2 703 944 A2**
(43) Date of publication of application: **05.03.2014**
(21) Application number: 13181734.8
(22) Date of filing: 26.08.2013
(51) Int. Cl.: G06F 1/32, G06F 1/28

(54) **Processor, information processing apparatus, and power consumption management method**

(30) Priority: 31.08.2012 JP 2012192497
(71) Applicant: FUJITSU LIMITED, Kawasaki-shi, Kanagawa 211-8588 (JP)
(72) Inventor: Koinuma, Hideyuki, Kanagawa, 211-8588 (JP); Fukumura, Hiromi, Kanagawa, 211-8588 (JP); Hara, Michiharu, Kanagawa, 211-8588 (JP); Kageyama, Hironobu, Kanagawa, 211-8588 (JP); Yoshida, Toshio, Kanagawa, 211-8588 (JP)
(74) Representative: HOFFMANN EITLE

(57) **Abstract**

When a result of detection by a current sensor 22 represents the occurrence of an overcurrent, comparators 23 of PSUs 2 transmit a present report indicating that fact to an SP 1. Receiving the present report, an FPGA 12 of the SP 1 turns on a forcible low-power signal. A forcible power saving control circuit 32 of a CPU 3 directly inputs a forcible-low-power-mode signal, turns on the signal, and controls an instruction issuance control unit that is configured to issue an instruction in the CPU 3, so as to immediately decrease the frequency at which the instruction issuance control unit issues instructions. This control is cancelled after the DVFS control circuit 35 has reduced the voltage of power output from a DDC 4 and a clock frequency output from a PLL circuit.

## Description

### FIELD

The embodiments discussed herein are related to a technique of suppressing the power consumption of a processor such as a Central Processing Unit (CPU) or the like that executes instructions.

### BACKGROUND

Processors that execute instructions are widespread in the form of products under the name of a CPU, an MPU (Micro-Processing Unit), a processor, etc., and are mounted on various types of electronic devices. In particular, servers that are required to have a high processing performance have many processors.

Voltages applied to processors are much lower than voltages of a commercial power supply. Accordingly, an information processing apparatus such as a server having a processor is provided with at least one power supply device for converting voltages. An information processing apparatus that is required to have a high reliability is provided with a plurality of power supply devices. This is for the purpose of enabling operations even when one power supply device has become unable to supply power due to a failure or the like.

Usually, a power supply device is provided with an overcurrent protection function, which prevents an overcurrent from flowing, so that the power supply device itself or load devices are not broken. This overcurrent protection function limits the amounts of output currents so as to reduce output voltages when currents that have been determined to be overcurrents have flowed.

Selection of a power supply device provided with an overcurrent protection function as described above has to be made in such a manner that the occurrence of overcurrents is prevented. However, as the ratings of power supply devices increase, their procurement costs also increase, and their sizes also increase. Also, the conversion efficiency of power varies in accordance with the amount of power to be supplied, and tends to decrease as the amount of supplied power becomes smaller than the amount of supplied power that leads to the highest conversion efficiency. Accordingly, the rating of a power supply device to be employed is usually controlled so that it does not considerably exceed the maximum power consumption of the information processing apparatus by taking the procurement costs, the size, and the conversion efficiency into consideration. This is also applied to a case where a plurality of power supply devices provide power. It is desirable to employ a power supply device of a smaller size in order to reduce the total size of the information processing apparatus.

Because of the above reasons, when a plurality of power supply devices provide power, there is a possibility that the stoppage of a supply of power from at least one power supply device causes overcurrents to flow to power supply devices that are providing power. Many information processing apparatuses such as servers or the like are provided with redundant power supply devices that provide power as necessary. In an information processing apparatus provided with this redundant power supply device, a redundant power supply device can start a supply of power when the supply of power from a power supply device has stopped. However, even when a redundant power supply device has started a supply of power, overcurrents may flow to a power supply device that is supplying power when the start of the supply of power is delayed, resulting in lowered output voltages.

Today, electronic devices such as a processor like a CPU or the like, a semiconductor memory, etc., have been advanced to operate at lower voltages. Accompanying this advance toward operations at lower voltages, the tolerance of variations in voltages of electronic devices has become narrower. Many such electronic devices are used in an information processing apparatus such as a server, etc. Accordingly, reduction in output voltages in a power supply device often cause malfunctions of electronic device. Malfunctions of electronic devices cause systems to go down. Thus, it is also important to be able to immediately suppress the power consumption of an information processing apparatus so that overcurrents do not flow to a power supply device.

Today, accompanying the advance of semiconductor technology, processors have started to include an immense number of transistors, and their power consumption has also increased. Usually, processors consume a large part of the power consumed by electronic devices included in an information processing apparatus. Accordingly, it is important to suppress the power consumption of processors in order to efficiently suppress the power consumption of an information processing apparatus.

In recent years, some information processing apparatuses have a DVFS (Dynamic Voltage Frequency Scaling) function as a power saving function. A DVFS function can reduce the power-supply voltage applied to a processor and/or the frequency of a clock used by a processor. Reduction in ether a power-supply voltage or a clock frequency will lead to better suppression of the power consumption of the processor. A power-supply voltage applied to a processor is usually obtained by converting power supplied by a power supply device.

However, reducing a power-supply voltage and a clock frequency requires time to some extent. For example, changing a clock frequency requires changing the multiplication number of a PLL (Phase Locked Loop) circuit. This change of a clock frequency through a PLL circuit can be performed within approximately several hundred µs. When a power supply device has failed, the power-supply voltage decreases gradually, and this time period is long enough to cause malfunctions in modern processors. Accordingly, it is important to be able to suppress power consumption in a processor immediately.

Patent Document 1: Japanese Laid-open Patent Publication No. 2009-60758

Patent Document 2: Japanese Laid-open Patent Publication No. 7-28561

### SUMMARY

According to an aspect of the embodiments, it is an object to provide a technique of immediately suppressing power consumption in an information processing apparatus to which power is being supplied, when an overcurrent has occurred in a power supply device that is supplying the power to the information processing apparatus.

A system to which embodiments of the present invention have been applied includes an instruction issuance unit configured to control issuance of an instruction, an instruction processing circuit configured to execute an instruction issued by the instruction issuance unit, an instruction input unit configured to input, from outside, a power instruction related to power consumption, and an execution frequency control unit configured to control the instruction issuance unit or the instruction processing circuit or any combination thereof so as to reduce an execution frequency at which the instruction processing circuit executes an instruction, when the power instruction input by the instruction input unit requests that the power consumption be suppressed.

### BRIEF DESCRIPTION OF DRAWINGS

FIG. 1 explains a configuration example of constituent elements included in an information processing apparatus according to the present embodiment;
FIG. 2 illustrates a configuration example of a CPU;
Fig. 3 illustrates a configuration example of an instruction issuance control unit;
FIG. 4 illustrates a configuration example of mounting information;
FIG. 5 illustrates an example of reduced amounts of power consumption that is achieved depending upon the count values set for two cyclic counters;
FIG. 6 illustrates an example of a method of setting a DVFS setting value;
FIG. 7 is a flowchart illustrating the operation flow of the information processing apparatus for a case when an overcurrent has occurred in at least one of the PSUs;
FIG. 8 is a flowchart illustrating the operation flow of the information processing apparatus in a case when a supply of power has been restarted after the supply of power was stopped;
FIG. 9 illustrates an example of an arrangement that is included in an FPGA so that the cancellation of the setting of the forcible low-power mode in a forcible power saving control circuit is performed;
FIG. 10 illustrates forcible-low-power-mode signals output from a state determination unit in accordance with a situation;
FIG. 11 illustrates a configuration example of the state determination unit; and
FIG. 12 is a flowchart explaining the flow of operations that a CPU is made to perform in response to a turning off of a forcible-low-power-mode signal.

### DESCRIPTION OF EMBODIMENTS

Hereinafter, embodiments of the present invention will be explained in detail by referring to the drawings.

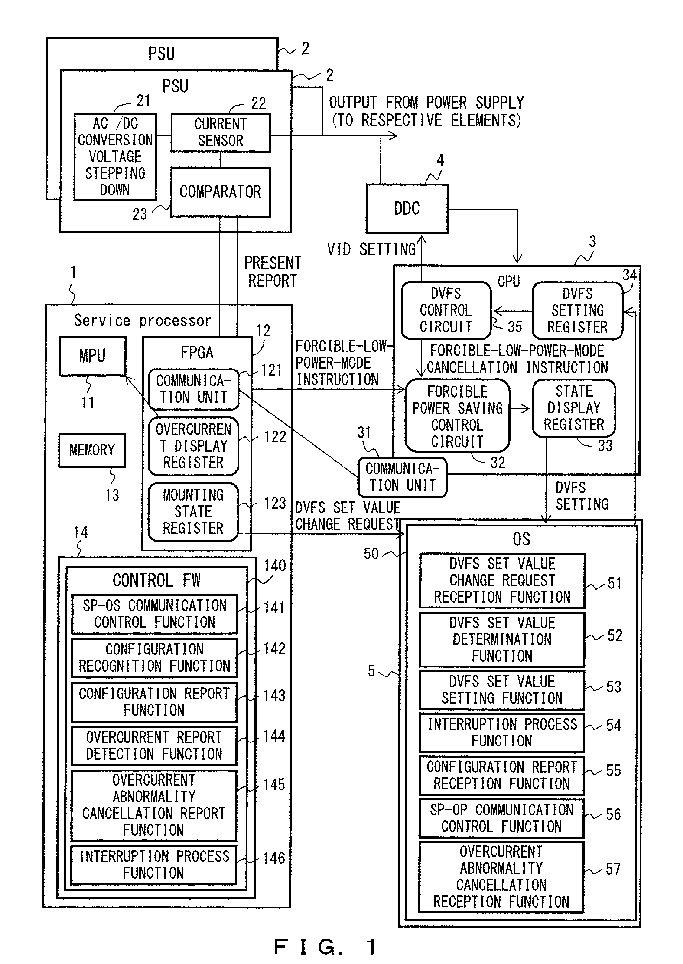

FIG. 1 explains a configuration example of constituent elements included in an information processing apparatus according to the present embodiment. An information processing apparatus according to the present embodiment is, for example, a server, and includes, as constituent elements, an SP (Service Processor) 1, two PSUs (Power Supply Units) 2, at least one CPU 3, a DDC (DC-DC Converter) 4, and a storage device 5. The information processing apparatus also includes a PCI (Peripheral Components Interconnect) card or the like as constituent elements, although they are not illustrated in the drawings. This PCI card is used for performing communications through, for example, networks.

The above CPU 3 is a processor according to the present embodiment. An information processing apparatus according to the present embodiment includes this CPU 3 as a constituent element. The configuration of the information processing apparatus is not limited to the configuration illustrated in FIG. 1. For example, the information processing apparatus may employ a configuration in which two or more PSUs 2 supply power to a plurality of information processing apparatuses. In other words, any configurations can be employed as long as the configurations include two or more PSUs 2 to supply power to one or more CPUs 3 directly or indirectly.

The PSUs 2 are power supply devices that output direct-current power obtained by stepping down the voltage of an input alternating current. As illustrated in FIG. 1, each of the PSUs 2 has an AC (Alternating Current)/DC (Direct Current) conversion unit 21, a current sensor (detector) 22, and a comparator 23.

The AC/DC conversion unit 21 converts an input alternating current into a direct current. The current sensor 22 detects the amount of the direct current obtained by the conversion. The comparator 23 compares the result of detecting the current amount by the current sensor 22 with the value that corresponds to the rating of the AC/DC conversion unit 21, and thereby determines whether or not the current being supplied from the AC/DC conversion unit 21 is an overcurrent. The determination result by the comparator 23 is output to the SP 1. Hereinafter, this determination result is also referred to as a "present report". The purpose of outputting this present report to an SP 20 in real time is to respond immediately to the overcurrent flowing into the PSUs 20.

The SP 20 is a management device that manages the information processing apparatus including the SP 20, and includes an MPU 11, an FPGA (Field Programmable Gate Array) 12, a memory 13, and a ROM (Read Only Memory) 14. In addition, the SP 20 includes a PCI card for performing communication with networks, although this is not illustrated specifically.

The ROM 14 stores control FW (FirmWare) to be executed by the MPU 11. The MPU 11 manages the information processing apparatus by reading, onto the memory 13, control FW (firmware) 140 stored in the ROM 14 so as to execute the control FW 140. The FPGA 12 is mounted on the SP 1 for performing communication with the PSUs 2 and the CPU 3. On this FPGA 12, a communication unit 121 used for communication with the CPU 3, an overcurrent display register (reg) 122 to which the values of present reports are written, and a mounting state register (reg) 123 are mounted. The mounting state register (reg) 123 stores mounting information that represents constituent elements included in the information processing apparatus.

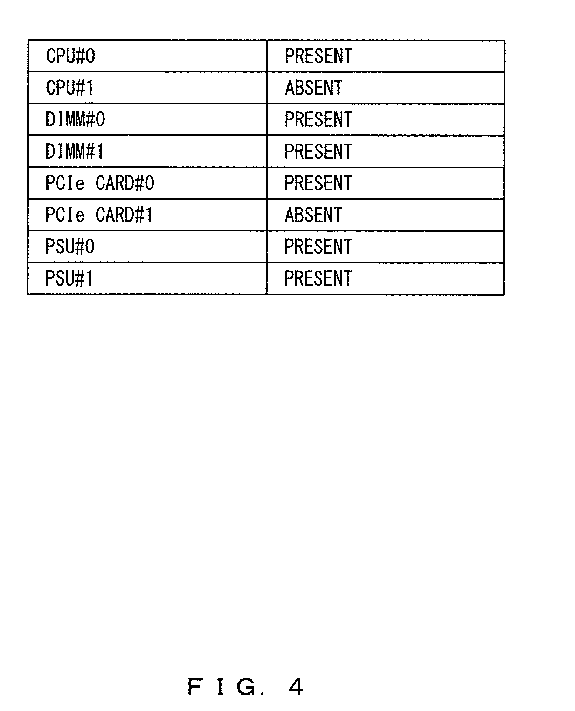

FIG. 4 illustrates a configuration example of mounting information. The configuration example of mounting information illustrated in FIG. 4 is a case where element information representing a constituent element that can be mounted on an information processing apparatus and existence information representing a presence or absence of the constituent element are stored for each constituent. "Present" and "Absent" in FIG. 4 represent the contents of existence information. "Present" means that the corresponding constituent element exists, and "Absent" means that the corresponding constituent element does not exist. "CPU#0", "CPU#1", "DIMM#1", etc. in FIG. 4 represent the contents of element information.

The control FW 140 executed by the MPU 11 includes an SP-OS communication control function 141, a configuration recognition function 142, a configuration report function 143, an overcurrent report detection function 144, an overcurrent abnormality cancellation report function 145, and an interruption process function 146 as subprograms. These functions 141 through 146 are related to the control of power consumption in the CPU 3. Functions related to ordinary management are omitted from the figure.

The SP-OS communication control function 141 is a function for controlling communication that uses the communication unit 121 of the FPGA 12. The configuration recognition function 142 is a function for recognizing the configuration of the information processing apparatus, and results of recognizing constituent elements by the configuration recognition function 142 are stored in the mounting state register 123 of the FPGA 12 as mounting information. The configuration report function 143 is a function for reporting mounting information stored in the mounting state register 123 to the CPU 3. The SP-OS communication control function 141 is used for reporting mounting information to the CPU 2.

The overcurrent report detection function 144 is a function for detecting the occurrence of overcurrents by referring to the present report data stored in the overcurrent display register 122.

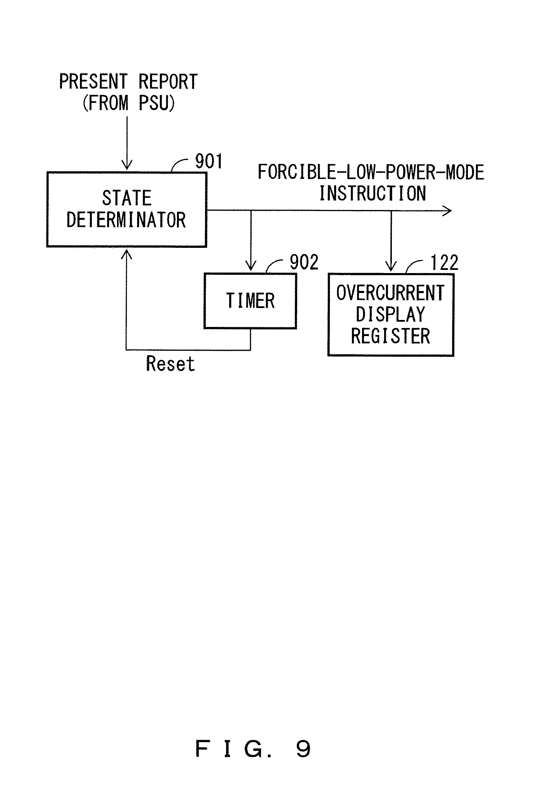

The FPGA 12 detects changes in the content of present reports, i.e., changes from content indicating no occurrence of overcurrents into content indicating the occurrence of overcurrents, and turns on (activates), for example, a forcible-low-power-mode signal output from the communication unit 121. A forcible low-power mode is a mode that makes the CPU 3 suppress the power consumption immediately, and turning on a forcible-low-power-mode signal indicates that this forcible low-power mode has been set. In this example, it is assumed that the value of the forcible-low-power-mode signal is 1, i.e., that the voltage level thereof is H (high). This forcible-low-power-mode signal is output from a state detorminator 901 illustrated in FIG. 9.

The overcurrent abnormality cancellation report function 145 is a function for transmitting a cancellation report of a response to an overcurrent (overcurrent abnormality cancellation report) to the CPU 3. The interruption process function 146 is a function for making the MPU 11 perform an interruption process in instruction to make a response to the occurrence of an overcurrent.

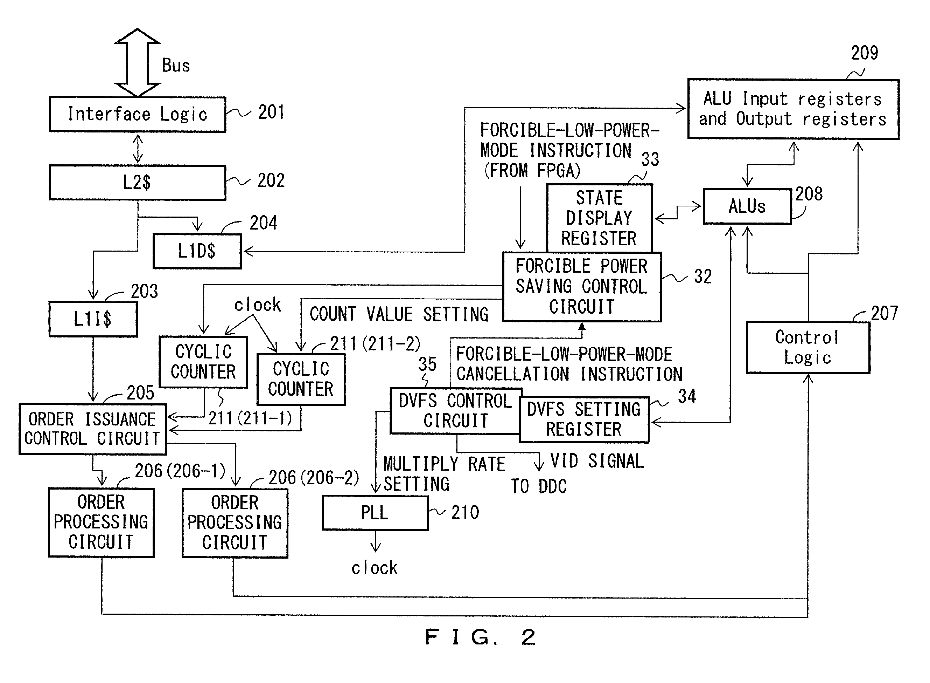

The CPU 3 includes a communication unit 31, a forcible power saving control circuit (an execution frequency control circuit) 32, a state display register 33, a DVFS setting register 34, and a DVFS control circuit (voltage frequency control circuit) 35. More detailed explanations will be given later by referring to FIG. 2.

The communication unit 31 enables communications with the communication unit 121 of the FPGA 12. The forcible power saving control circuit 32 and the DVFS control circuit 35 can both suppress the power consumption of the CPU 3. A forcible-low-power-mode signal output from the communication unit 121 of the FPGA 12 is input to the forcible power saving control circuit 32 directly, not via the communication unit 31.

Power output from the PSUs 2 is converted by the DDC4 into power at a different voltage, and is supplied to the CPU 3. The DVFS control circuit 35 can control the voltage of power supplied from the DDC4 (power-supply voltage) in accordance with a VID (voltage IDentifier) set in the DDC4. The DVFS control circuit 35 can control the frequency of a clock for operating the CPU 3 in accordance with the setting of the multiply rate of a PLL circuit 210 illustrated in FIG. 2. Reduction in either a power-supply voltage or a clock frequency will lead to better suppression of the power consumption of the CPU 3. The setting of the VID and the multiply rate is performed by referring to data stored in the DVFS setting register 34. Determination of data to be stored in the DVFS setting register 34 and the storing of the determined data are implemented by executing an OS 50.

Making the DVFS control circuit 35 reduce a power-supply voltage and/or a clock frequency requires a time period to some extent. Accordingly, even when the DVFS control circuit 35 immediately reduces a power-supply voltage and/or a clock frequency in response to a present report indicating the occurrence of an overcurrent, there is a possibility that the voltage of power supplied by the PSUs 2 drops to a level sufficient to cause a malfunction in the CPU 3 or the like. Accordingly, the forcible power saving control circuit 32 is provided in order to suppress the power consumption of the CPU 3 more rapidly. The purpose of inputting, directly to the forcible power saving control circuit 32, the forcible-low-power-mode signal output from the communication unit 121 of the FPGA 12 is to suppress the power consumption of the CPU 3 more rapidly.

When a forcible-low-power-mode signal has been turned on, the forcible power saving control circuit 32 stores, in the state display register 33, data indicating that the signal has been turned on. The data stored in the state display register 33 is referred to by the OS 50. Thereby, the OS 50 recognizes the fact that the forcible low-power mode has been set.

This OS 50 includes a DVFS set value change request reception function 51, a DVFS set value determination function 52, a DVFS set value setting function 53, an interruption process function 54, a configuration report reception function 55, an SP-OP communication control function 56, and an overcurrent abnormality cancellation reception function 57 as subprograms. These functions 51 through 57 are related to setting of a forcible low-power mode. Ordinary functions related to an OS are omitted in this explanation.

The DVFS set value change request reception function 51 refers to data stored in the state display register 33 so as to determine the necessity of performing DVFS. In FIG. 1, it is indicated that "DVFS set value change request" is output from the SP 20 to the OS 50. This DVFS set change request has in the past usually been conducted, and this DVFS set change request is also processed by the DVFS set value change request reception function 51. Because DVFS set change requests have usually been conducted in the past, detailed explanations thereof will be omitted in this example.

The DVFS set value determination function 52 is a function for determining a VID and a multiply rate to be set, and is activated by the DVFS set value determination function 52. The DVFS set value setting function 53 is a function for storing, in the DVFS setting register 34, data representing a VID and a multiply rate determined by the DVFS set value determination function 52. The interruption process function 54 is a function that refers to data stored in the state display register 33 so as to make the CPU 3 activate, for example, the DVFS set value change request reception function 51 via an interruption process.

The configuration report reception function 55 is a function for processing mounting information that is reported from the SP 20 and that is stored in the mounting state register 123. The SP-OP communication control function 56 is a function for controlling communications with the SP 20 via the communication unit 31. The overcurrent abnormality cancellation reception function 57 is a function for processing the cancellation of a response to an overcurrent reported from the SP 20. This overcurrent abnormality cancellation reception function 57 can activate the DVFS set value determination function 52 in order to return a VID and a multiply rate to the normal values.

FIG. 2 illustrates a configuration example of a CPU. The CPU 3 further includes, as illustrated in FIG. 2, an interface logic 201, a level 2 cache 202, an instruction level 1 cache 203, a data level 1 cache 204, an instruction issuance control circuit 205, two instruction processing circuits 206 (206-1 and 206-2), a control logic 207, an ALU (Arithmetic and Logic Unit) group 208, a register group 209, the PLL circuit 210, and two cyclic counters 211 (211-1 and 211-2). The register group 209 appears in FIG. 2 by the name "ALU Input registers and Output registers".

The cyclic counter 211 transmits and receives data through a bus. The communication unit 31 illustrated in FIG. 1 corresponds to the cyclic counter 211. Data received through a bus is stored in the level 2 cache 202.

In order to read an instruction, the instruction issuance control circuit 205 specifies the address of the instruction, and performs a reading process. Then, the instruction stored in the level 2 cache 202 at the specified instruction is output to the instruction issuance control circuit 205 via the instruction level 1 cache 203. Data is read by the control logic 207, and accordingly the address of the data is specified so as to perform the reading process. Data stored in the level 2 cache 202 is output to one of registers in the register group 209 via the level 1 cache 204. This register group 209 includes an input register group for storing data to be supplied to the ALU group 208, and an output register group for storing data output from the ALU group 208.

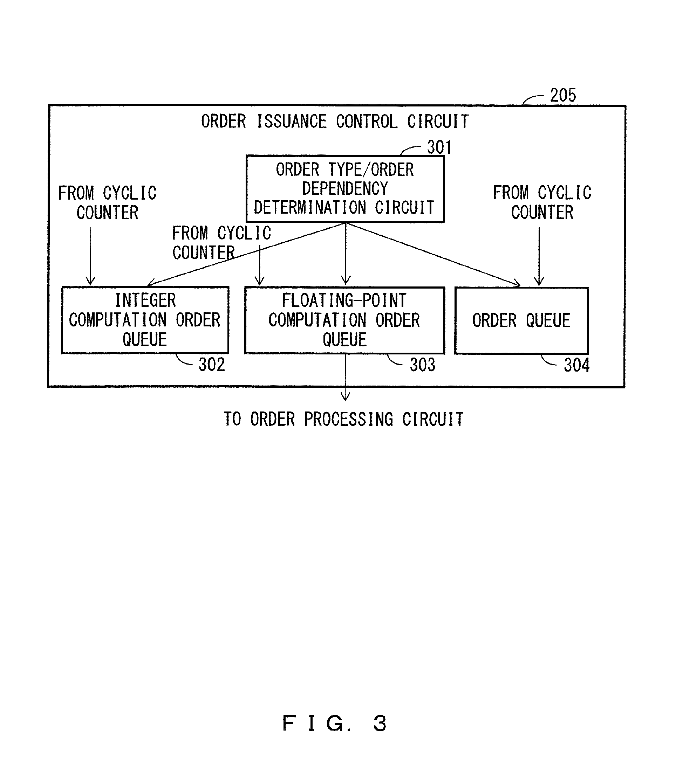

The instruction issuance control circuit 205 reads an instruction stored in the instruction level 1 cache 203, and issues the read instruction as an instruction to be executed. The instruction issuance control circuit 205, as illustrated in, for example, FIG. 3, includes an instruction type/instruction dependency determination circuit 301, an integer computation instruction queue 302, a floating-point computation instruction queue 303, and an instruction queue 304.

The instruction type/instruction dependency determination circuit 301 generates an address of an instruction to be fetched from the instruction level 1 cache 203 so as to fetch the instruction, predicts the branching destination and the branching direction of the fetched instruction, and stores an instruction to be issued in one of the queues 302 through 304 in accordance with the instruction type. Thereby, the integer computation instruction queue 302 only stores integer computation instructions, the floating-point computation instruction queue 303 only stores floating-point computation instructions, and the instruction queue 304 only stores instructions of types other than the first two types. In this example, it is assumed that only instructions to generate virtual addresses (referred to as "virtual address addition instruction" hereinafter) are stored in the instruction queue 304. According to this assumption, the ALU group 208 includes at least one integer execution pipeline, at least one floating-point execution pipeline, and at least one virtual address adder, respectively.

The two cyclic counters 211 count the clock output from the PLL circuit 210, and turn on (activate) a carry signal so as to reset the counted value to the initial value when the counted value has reached a set value (denoted by "count value" in FIG. 2). Reading instructions from the respective queues 302 through 304, i.e., issuance of instructions, is controlled by a carry signal output from one of the cyclic counters 211. Thereby, the frequency at which the instruction issuance control circuit 205 issues instructions can be controlled through the count values set in the cyclic counters 211.

The two instruction processing circuits 206 are buffers for holding, for example, instructions of corresponding instruction types until those instructions become executable. Accordingly, instructions read from the respective queues 302 through 304 of the instruction issuance control circuit 205 are output to one of the instruction processing circuits 206 to which the instruction has to be output. Instruction types to be made to correspond to the respective instruction processing circuits 206 are not limited particularly. However, in this example, it is assumed for convenience that integer computation instructions and floating-point computation instructions are made to correspond to the instruction processing circuit 206-1 while virtual address addition instructions are made to correspond to the instruction processing circuit 206-2. It is also assumed that carry signals output from the cyclic counter 211-1 are input to the integer computation instruction queue 302 and the floating-point computation instruction queue 303 while carry signals output from the cyclic counter 211-2 are input to the instruction queue 304.

Instructions held by the instruction processing circuits 206 are read by the register group 209. This control logic 207 reads instructions that have become executable (can be input) from the corresponding instruction processing circuits 206, and supplies the instructions to corresponding ALUs in the ALU group 208. Data necessary to execute instructions of the ALU group 208 is obtained from the register group 209. Data obtained by executing instructions of the ALU group 208 can be output to the level 1 cache 204 via the register group 209.

Data that has been written to the state display register 33 by the forcible power saving control circuit 32 is referred to by the OS 50 via the ALU group 208. Data is stored in the DVFS setting register 34, which is referred to by the DVFS control circuit 35, also via the ALU group 208.

The forcible power saving control circuit 32 is a circuit that sets count values for the cyclic counters 211. When a forcible-low-power-mode signal has been turned on, i.e., when the forcible low-power mode has been set, the forcible power saving control circuit 32 sets a greater count value for at least one of the two cyclic counters 211. This decreases the frequency at which the instruction issuance control circuit 205 issues instructions.

This decrease in the instruction issuance frequency decreases the frequency at which instructions are issued in the ALU group 208. This causes a reduction in switching by the CPU 3, and also makes the clock gating mechanism, which blocks the supply of clocks to ALUs that are not operating, operate more. Count values can be set for the two cyclic counters 211 very promptly. A forcible-low-power-mode signal, which triggers updating of setting of count values for the cyclic counters 211, is input directly from the FPGA 12 to the forcible power saving control circuit 32. Therefore, even when an overcurrent has occurred in one of the two PSUs 2, the power consumption of the CPU 3 can be reduced to a sufficiently low level.

In an information processing apparatus, the power consumption by CPUs occupies a majority part of the total power consumption. For example, the power consumption of a PCI card is approximately 25W and the power consumption of a hard disk device is approximately 15W, while the power consumption of a CPU is approximately 250W. It is possible to design a system that reduces immediately the power consumption of CPUs so as to avoid a situation where an output voltage of the PSU 2 for supplying power decreases to a level that causes malfunctions in the overcurrent protection function.

It is possible to avoid a situation where a voltage output from the PSU 2 for supplying power decreases to a level that causes malfunctions in the overcurrent protection function, and thereby continuous operations are possible even when a PSU is not mounted on an information processing apparatus as a substitute for the PSU 2 that has stopped supplying power. Accordingly, by reducing the number of PSUs to be mounted, the reduction of production costs, size, etc. of information processing apparatuses can be achieved more easily.

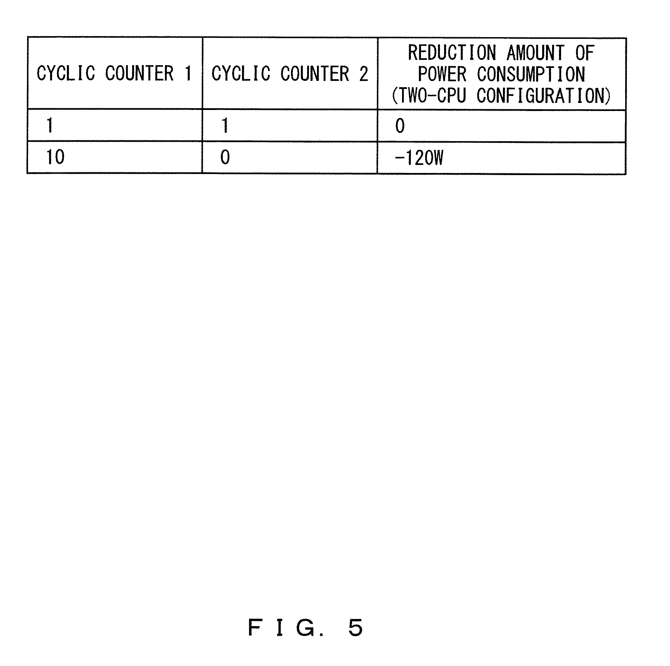

FIG. 5 illustrates an example of reduction amounts of power consumption that are achieved depending upon the count values set for the two cyclic counters. "Cyclic counter1" and "Cyclic counter2" in the table represent the cyclic counters 211-1 and 211-2, respectively. Values "1", "0", "1", and "10" represent the count values set in the cyclic counters 211. The reduction amounts of power consumption are represented in units of "W" on an assumption that two CPUs 3 are mounted on an information processing apparatus.
When "1" is set as the count value for each of the cyclic counters 211, the situation is a normal situation, where none of the PSUs 2 have overcurrents occurring therein. FIG. 5 illustrates that power consumption can be reduced by 120W compared with the normal situation by changing the count values of the cyclic counters 211-1 and 211-2 to "10" and "0", respectively.

The changing of the count values for the cyclic counters 211-1 and 211-2 in the forcible low-power mode as illustrated in FIG. 5 is based on an assumption that two PSUs 2 supply power. It is desirable that the count values set for the cyclic counters 211 in the forcible low-power mode be determined by taking into consideration the number of PSUs 2 used for supplying power, the maximum power consumption of the information processing apparatus, the rating of each of the PSUs 2, etc.

The cyclic counter 211-2 for which "0" has been set as the count value does not turn on a carry signal. Accordingly, the instruction issuance control circuit 205 does not output an instruction to the instruction processing circuit 206-2. The purpose of changing the count value of the cyclic counter 211-2 to "0" is to make the clock gating mechanism operate more effectively. In other words, the purpose is to achieve necessary power consumption reduction more securely. When the count value of the cyclic counter 211-2 is changed to "0", the supply of power to the corresponding ALU may be stopped.

When the ALU group 208 includes a plurality of ALUs that are of the same type, it is also possible to employ a configuration in which the count values of the cyclic counters 211 are not changed and the supply of power is stopped for all ALUs of the same type except for at least one ALU. Even when the supply of power for ALUs is stopped, power consumption can be reduced sufficiently.

Usually, at the time when the frequency at which the instruction issuance control circuit 205 issues instructions, instructions that have not been executed remain in the respective instruction processing circuits 206. However, the time required to execute one instruction is 1ns or shorter. It is sufficient to be able to eliminate an overcurrent condition of the PSUs 2 before the time period of 100µs elapses after the overcurrent occurred. Accordingly, the number of instructions that remain unexecuted in the respective instruction processing circuits 206 can be ignored in practice because they are all processed before the time period of 100µs elapses.

The example illustrated in FIG. 5 is based on an assumption that power is supplied from the two PSUs 2, as described above. Accordingly, there is only one combination between the count values to be set for the cyclic counters 211 by the forcible power saving control circuit 32 when the forcible low-power mode has been set. However, a plurality of combinations may be prepared. In other words, it is possible to change the combinations of the count values to be set for the cyclic counters 211 by the forcible power saving control circuit 32 in accordance with the number of the PSUs 2 used for supplying power, the rating of each PSU 2, the maximum power consumption of the information processing apparatus, the configuration of the information processing apparatus, or the like.

When a forcible-low-power-mode signal has been turned on, the forcible power saving control circuit 32 stores in the state display register 33 data indicating that the forcible low-power mode has been set. Thereby, the VID to be set and the data representing the multiply rate are stored in the DVFS setting register 34 under the control of the OS 50. Thereby, the DVFS control circuit 35 changes at least one of the VID set in the DDC4 and the multiply rate set in the PLL circuit 210. A VID to be set and data representing a multiply rate are referred to as a "DVFS setting value" hereinafter.

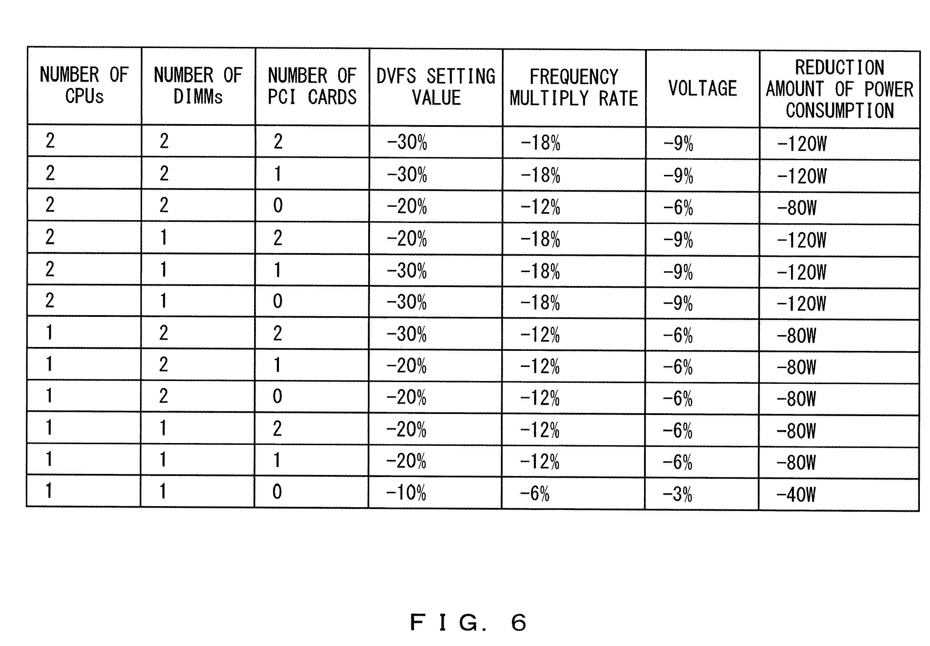

FIG. 6 illustrates an example of a method of setting a DVFS setting value. The setting method example illustrated in FIG. 6 is for a case where a DVFS setting value is determined in accordance with the configuration of an information processing apparatus.

As a configuration of the information processing apparatus, only the numbers of the CPUs 3, the DIMMs, and the PCI cards are assumed. Thereby, FIG. 6 illustrates the DVFS setting value, the multiply rate, the voltage, and the power consumption reduction amount for each configuration of the information processing apparatus. A voltage is represented, as a percentage, in the form of the amount of reduction from a reference voltage based on the setting of the VID in accordance with the DVFS setting value. A multiply rate is also represented, as a percentage, in the form of the amount of reduction from a reference clock frequency based on the setting of a multiply rate in accordance with the DVFS setting value. A power consumption reduction amount is represented, as a percentage, in the form of the amount of reduction from the normal state.

When the forcible low-power mode has been set, the DVFS control circuit 35 controls the DDC4 and the PLL circuit 210 in accordance with the DVFS setting value determined as illustrated in FIG. 6. Thereafter, the DVFS control circuit 35 instructs the forcible power saving control circuit 32 to cancel the setting of the forcible low-power mode.

This cancellation instruction is given after performing the control of the DDC4 and the PLL circuit 210, i.e., after the setting of the VID and the multiply rate and before the completion of the changing based on the settings. Therefore, even when the count values for the cyclic counters 211 are returned to the count values for the normal state, the power consumption can be reduced sufficiently. Accordingly, the forcible power saving control circuit 32 cancels the setting of the forcible low-power mode in accordance with the cancellation instruction from the DVFS control circuit 35, and sets the count values for the normal state in the cyclic counters 211. The purpose of making the forcible power saving control circuit 32 cancel the setting of the forcible low-power mode as described above is to simplify the process of the OS/control FW, and it is also possible to employ a configuration in which the setting of the forcible low-power mode is cancelled by the OS/FW, not by the hardware.

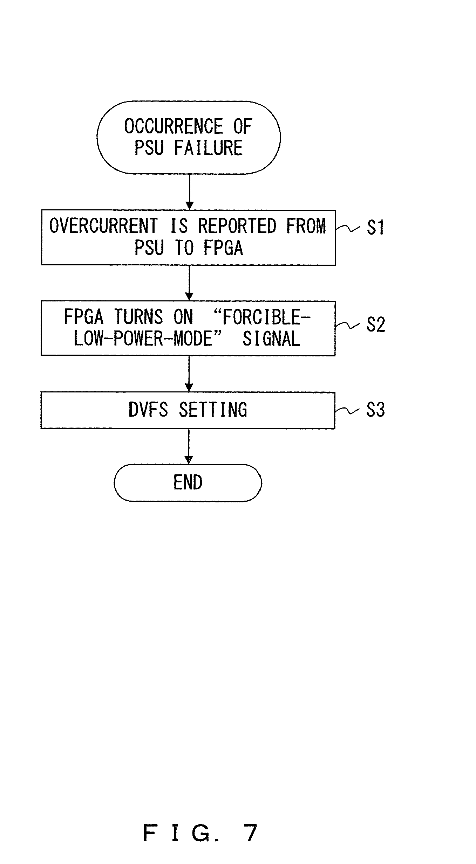

FIG. 7 is a flowchart illustrating the operation flow of the information processing apparatus for a case when an overcurrent has occurred in at least one of the PSUs. A situation where an overcurrent has occurred in at least one of the PSUs 2 is a situation where the the supply of power from one of the PSUs 2 has stopped. Next, by referring to FIG. 7, operations performed by the information processing apparatus when an overcurrent has occurred in at least one of the PSUs will be explained in detail.

The overcurrent that has occurred in the PSU 2 is detected by the current sensor 22, and a present report indicating the occurrence of an overcurrent is output from the comparator 23 (S1). In response to this present report, the FPGA 12 turns on a forcible-low-power-mode signal, and that present report is stored as data in the overcurrent display register 122 of the FPGA 12 (S2). As a result of this, the occurrence of the overcurrent is recognized by the MPU 11 (the control FW 140 executed by the MPU 11) of the SP 1 and by the OS 5 executed by the CPU 3. In response to the turning on of the forcible-low-power-mode signal, the forcible power saving control circuit 32 of the CPU 3 sets the count values for the cyclic counters 211 as illustrated in FIG. 5.

The OS 50 that has detected the occurrence of the overcurrent, i.e., the fact that the forcible low-power mode has been set, refers to the mounting information (FIG. 4) received beforehand from the SP 1, determines the DVFS setting value as illustrated in FIG. 6, and makes the DVFS setting register 34 store the determined DVFS setting value (S3).

In response to the storing of the DVFS setting value in the DVFS setting register 34, the DVFS control circuit 35 controls the DDC 4 and the PLL circuit 210 so as to reduce the voltage of the power output from the DDC 4 and the frequency of the clock output from the PLL circuit 210. After reducing the voltage and the frequency, the DVFS control circuit 35 instructs the forcible power saving control circuit 32 to cancel the setting of the forcible low-power mode. In response to this instruction, the forcible power saving control circuit 32 sets the count values of the normal state in the cyclic counters 211. By setting these count values, the operations of the information processing apparatus accompanying the occurrence of an overcurrent in at least one of the PSUs 2 is completed.

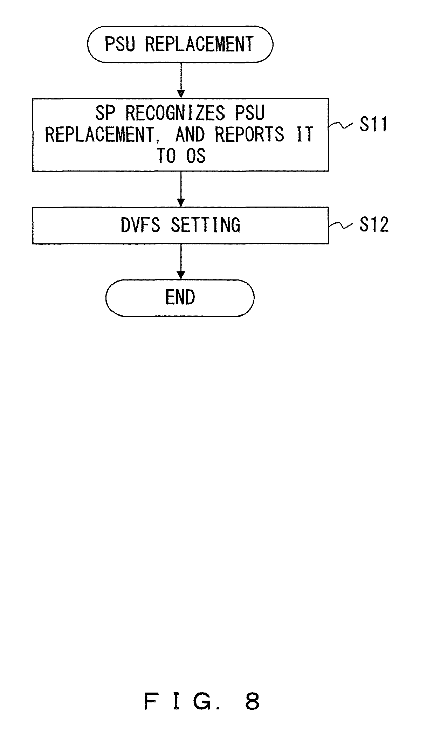

FIG. 8 is a flowchart illustrating the operation flow of the information processing apparatus in a case when the supply of power has been restarted after the supply of power was stopped.

Usually, in a configuration employing the two PSUs 2 for supplying power, what causes an overcurrent in at least one of the two PSUs 2 is the stoppage of a supply of power from one of the PSUs 2. Even when one of the PSUs 2 has stopped supplying power, the reduction in the power consumption in the CPU 3 based on the setting of the forcible low-power mode eliminates the overcurrent in the PSU 2 that is supplying power. Accordingly, it is assumed in the present embodiment that the supply of power after the stoppage of the supply of power from one of the PSUs 2 is restarted by replacement with a different PSU 2. Replacement with a different PSU 2 is recognized by the configuration recognition function 142 of the control FW 140. Next, detailed explanations will be given for the operations performed by the information processing apparatus when the replacement with a different PSU 2 has been performed, by referring to FIG. 8.

When a maintenance technician has replaced the PSU 2 that has stopped supplying power with a different PSU 2, the PSU 2 that has been mounted newly as a result of that replacement is recognized by the MPU 11 of the SP 1. In response to this recognition, the MPU 11 makes the FPGA 12 transmit an overcurrent abnormality cancellation report to the CPU 3 (S11).

The overcurrent abnormality cancellation report transmitted to the CPU 3 is processed by the OS 50. The OS 50 sets the DVFS setting value for the normal state in response to the reception of the overcurrent abnormality cancellation report, and stores the set DVFS setting value in the DVFS setting register 34 (S12). Thereby, the voltage of power output from the DDC 4 and the frequency of the clock output from the PLL circuit 210 are both returned to the values in the normal state. As a result of this, the power saving state of the CPU 3 is cancelled, and the operations performed by the information processing apparatus accompanying the replacement with a different PSU 2 are completed.

Note that although the DVFS control circuit 35 performs the cancellation of the setting of the forcible low-power mode in the forcible power saving control circuit 32 in the present embodiment, the forcible power saving control circuit 32 may perform this cancellation by using a different method. Hereinafter, an alternative example thereof will be explained specifically by referring to FIG. 9 through FIG. 12.

FIG. 9 illustrates an example of an arrangement that is included in an FPGA so that the cancellation of the setting of the forcible low-power mode in the forcible power saving control circuit is performed. This example is of a case where the forcible power saving control circuit 32 sets the forcible low-power mode in response to a turning on of the forcible-low-power-mode signal and cancels the setting of the forcible low-power mode in response to a turning off of the forcible-low-power-mode signal. The state detorminator 901 turns on the forcible-low-power-mode signal in response to changing, caused by the occurrence of an overcurrent, of a present report from the PSUs 2. The value of this forcible-low-power-mode signal is held by the overcurrent display register 122 as a value representing the contents of the present report.

A timer 902 outputs a rest signal to the state detorminator 901, e.g., turns on (activates) a reset signal after a prescribed time period has elapsed after the forcible-low-power-mode signal has been turned on. The state detorminator 901 turns off the forcible-low-power-mode signal in response to the turning on of the reset signal. The value of the reset signal in the ON state is assumed to be 1; in other words, the voltage level thereof is assumed to be High.

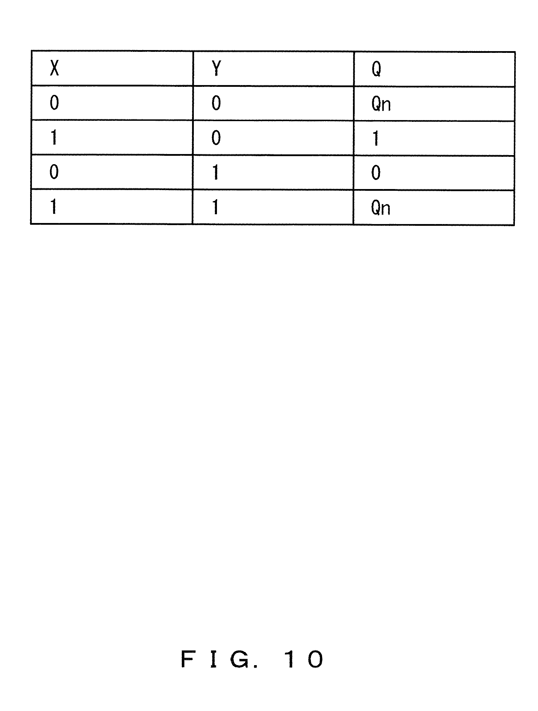

FIG. 10 illustrates forcible-low-power-mode signals output from the state determination unit in accordance with particular situations. In FIG. 10, "X", "Y", and "Q" represent a present report, a reset signal, and a forcible-low-power-mode signal, respectively. Also, "1", and "0" represent ON and OFF, respectively. "Qn" indicates that there are no changes from previous states.

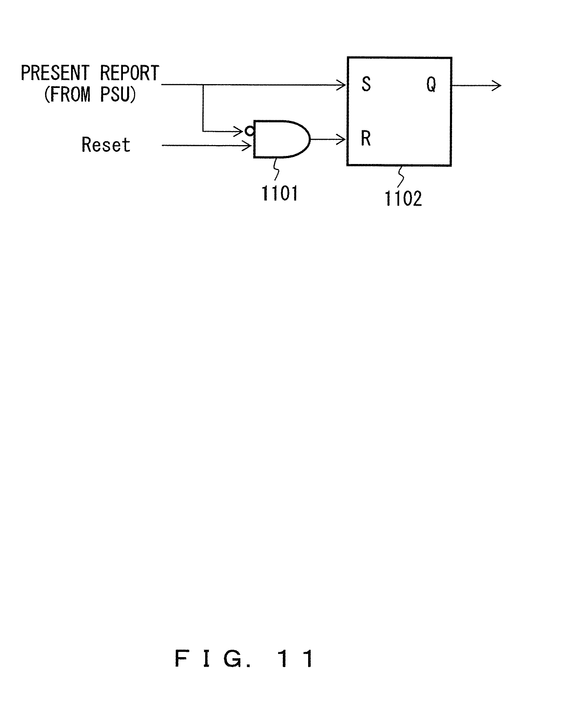

FIG. 11 illustrates a configuration example of the state determination unit. As illustrated in FIG. 11, the state detorminator 901 can be implemented by using an AND gate 1101 and an SR flip-flop 1102. The AND gate 1101 outputs the logical product between the negative of a present signal and a reset signal, and the SR flip-flop 1102 inputs a preset report to the input terminal (S) and also inputs, to the input terminal (R), a logical product output from the AND gate 1101. A signal output from output terminal Q serves as a forcible-low-power-mode signal.

In the arrangement of the FPGA 12 as described above, by setting a time that is longer than a prescribed period in the timer 902, a time period can be secured before the DDC 4 and the PLL circuit 210 have reduced a voltage and a clock frequency under the control of the DVFS control circuit 35. Therefore, the cancellation of the forcible low-power mode in the forcible power saving control circuit 32 can be performed appropriately.

When the arrangement as illustrated in FIG. 9 is mounted on the FPGA 12, it is possible to intermittently reduce the power consumption of the CPU 3 so that even when one of the PSUs 2 has stopped a supply of power due to a failure, the overcurrent protection function of the PSU 2 that is still supplying power does not operate. In other words, the operation is possible in the cycle of the occurrence of an overcurrent in the PSU 2, the reduction of the power consumption in the CPU 3, the elimination of the overcurrent in the PSU 2, the cancellation of the reduction in the power consumption of the CPU 3, and the occurrence of the overcurrent in the PSU 2. When this operation is performed, it is possible to a suppress decrease in the processing performance of the information processing apparatus (CPU 3) caused by the stoppage of the supply of power from the PSU 2.

Also, depending upon the system configuration, there is a possibility that the power consumption by the hardware and the amount of the power supplied by one PSU 2 will be in balance with each other, which is a situation where software loads make the power consumption by the hardware exceed the amount of supplied power only during a short period of time. In such a case, operations are possible in the cycle of an increase in software loads, the occurrence of an overcurrent in the PSU 2, the reduction of the power consumption in the CPU 3, the elimination of the overcurrent in the PSU 2, termination of software processes that need loads, the cancellation of the reduction of the power consumption of the CPU 3, and the continuation of the operation. When this operation is performed, it is possible to control the reduction in the processing performance of the information processing apparatus (CPU 3) caused by the stoppage of power supplied by the PSU 2 so that the processing performance reduction occurs only during a short period of time when the software loads are in an increased state.

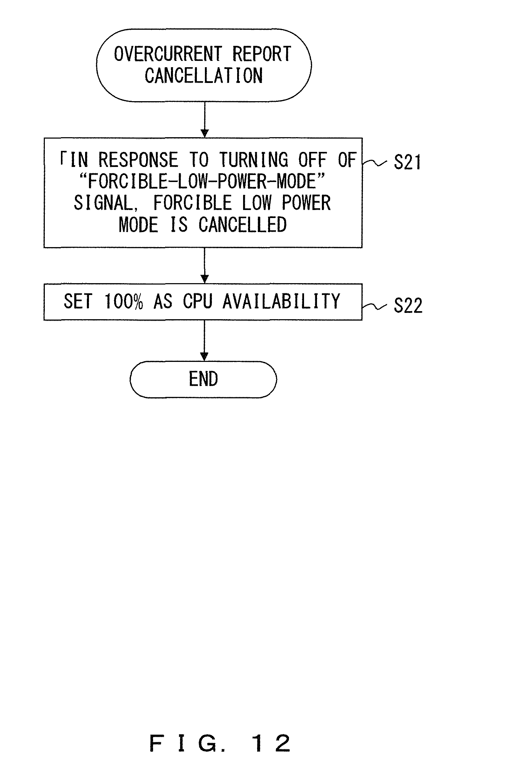

When the information processing apparatus operates in the above cycle, it is not necessary to make the information processing apparatus perform the operation of the flowchart illustrated in FIG. 8. The effects of the invention are achieved by making the CPU 3 perform the operations, as illustrated in the flowchart of FIG. 12. By referring to FIG. 12, detailed explanations will be given for the operations that the CPU 3 is made to perform. FIG. 12 is a flowchart explaining the flow of the operations that the CPU is made to perform in response to a turning off of a forcible-low-power-mode signal.

In response to a turning off of a forcible-low-power-mode signal, the forcible power saving control circuit 32 cancels the setting of the forcible low-power mode and also writes to the state display register 33 data indicating that the cancellation has been made, and reports that fact to the OS 50 (S21). In response to the report, the OS 50 stores the DVFS setting value in the normal state in the DVFS setting register 34 (S22). Thereby, the DVFS control circuit 35 returns the voltage output from the DDC 4 and the clock frequency output from the PLL circuit 210 to their normal states, respectively. As a result of this, the power saving state of the CPU 3 is cancelled, and the operations performed by the CPU 3 accompanying the turning off of a forcible-low-power-mode signal is completed.

There is a strong possibility that an overcurrent will occur in the PSUs 2 again when software loads have not been decreased after the cancellation of the power saving state as described above. Accordingly, the cancellation of the power saving state is performed during a short period of time before a forcible-low-power-mode signal is turned on again.

Alterations other than the above alteration examples may be made for the present embodiment. For example, it is also possible to employ a configuration in which a forcible-low-power-mode signal is turned on so as to set the forcible low-power mode in the forcible power saving control circuit 32, and thereafter the setting is cancelled automatically when a prescribed time period measured by the timer 902 has elapsed.

By employing the present invention, when an overcurrent has occurred in a power supply device that supplies power, the power consumption of the information processing apparatus to which the power is supplied can be suppressed immediately.

## Claims

1. A processor, comprising:
an instruction issuance control circuit configured to control issuance of an instruction;
an instruction processing circuit configured to execute an instruction issued by the instruction issuance control circuit;
an instruction input circuit configured to input, from outside, a power instruction related to power consumption; and
an execution frequency control circuit configured to control the instruction issuance control circuit or the instruction processing circuit or any combination thereof so as to reduce an execution frequency at which the instruction processing circuit executes an instruction, when the power instruction input by the instruction input circuit requests that the power consumption be suppressed.

2. The processor according to claim 1, wherein:
the execution frequency control circuit reduces the execution frequency by reducing an issuance frequency at which the instruction processing circuit issues the instruction.

3. The processor according to claim 1, further comprising:
a plurality of computation circuits configured to process a computation instruction, wherein:
the execution frequency control circuit halts at least one of the plurality of computation circuits and also reduces an issuance frequency at which the instruction issuance control circuit issues the computation instruction, and thereby reduces the execution frequency.

4. The processor according to claim 1, further comprising:
a counter configured to generate a control signal that enables the instruction issuance control circuit to issue the instruction, wherein:
the execution frequency control circuit changes time intervals at which the counter generates the control signals so as to reduce the execution frequency.

5. The processor according to claim 1, comprising:
a voltage frequency control circuit configured to control a power-supply voltage applied to the processor and a frequency of a clock used by the processor, wherein:
the execution frequency control circuit terminates control of reducing the execution frequency when the voltage frequency control circuit has started control of reducing power consumption of the processor after the power instruction requesting that the power consumption be suppressed is input to the instruction input circuit.

6. An information processing apparatus, at least comprising:
at least one processor, a plurality of power source devices that supply power to the processor, and a detector that detects an overcurrent occurring in one of the plurality of power supply devices, wherein:
the processor includes:
an instruction issuance control circuit configured to control issuance of an instruction;
an instruction processing circuit configured to execute an instruction issued by the instruction issuance control circuit;
an instruction input circuit configured to input a power instruction that is generated by using a result of detection by the detector and that is related to power consumption in the processor; and
an execution frequency control circuit configured to control the instruction issuance control circuit or the instruction processing circuit or any combination thereof so as to reduce an execution frequency at which the instruction processing circuit executes an instruction, when the power instruction input by the instruction input circuit requests that the power consumption be suppressed.

7. The information processing apparatus according to claim 6, comprising:
a termination instruction circuit configured to give, to the execution frequency control circuit, an instruction to terminate control of reducing the execution frequency after the execution frequency control circuit has reduced the execution frequency, wherein:
the execution frequency control circuit terminates control of reducing the execution frequency in accordance with the termination instruction by the termination instruction unit.

8. The information processing apparatus according to claim 7, wherein:
the termination instruction circuit gives the termination instruction, in response to a start of a supply of power by a new power source device or an elapsing of a time period during which a state of the overcurrent is eliminated in accordance with the control by the execution frequency control circuit or to any combination thereof.

9. A power consumption management method applied to an information processing apparatus at least including at least one processor, a plurality of power source devices that supply power to the processor, and a detector that detects an overcurrent occurring in one of the plurality of power supply devices, the method comprising:
employing, as the processor, a processor including an execution frequency switching function for switching an execution frequency of executing an instruction without changing a frequency of a clock provided inside; and
reducing a power consumption of the processor by reducing the execution frequency by using the execution frequency switching function included in the processor when the detection unit has detected the overcurrent.
